# FASCICULE DE BREVET EUROPEEN

(11) **EP 2 580 125 B1**
(45) Date de publication et mention de la délivrance du brevet: **29.10.2014**
(21) Numéro de dépôt: 11724636.3
(22) Date de dépôt: 10.06.2011
(51) Int. Cl.: B64G 1/00, B64G 1/14, B64G 1/40, B64G 1/62

(54) **MODULE REUTILISABLE SIMPLIFIE POUR LANCEUR**
VEREINFACHTES WIEDERVERWENDBARES MODUL FÜR EIN STARTGERÄT
SIMPLIFIED REUSABLE MODULE FOR LAUNCHER

(30) Priorité: 14.06.2010 FR 1054695
(43) Date de publication de la demande: 17.04.2013
(73) Titulaire: Astrium SAS, 75016 Paris (FR)
(72) Inventeur: PRAMPOLINI, Marco, F-78240 Chambourcy (FR)
(74) Mandataire: Ilgart, Jean-Christophe
(86) Numéro de dépôt international: PCT/EP2011/059663
(87) Numéro de publication internationale: WO 2011/157641

(56) Documents cités:
- WO-A1-99/47418
- US-B1- 6 450 452
- US-B1- 6 454 216
- US-B1- 6 616 092

## Description

### DOMAINE TECHNIQUE ET ART ANTÉRIEUR

La présente invention se rapporte à un module réutilisable destinée à former une partie d'un module de propulsion destiné à envoyer un engin dans l'espace, l'engin étant par exemple un lanceur destiné à envoyer une charge utile dans l'espace, telle que des satellites de télécommunication.

La fusée Ariane V est un exemple bien connu de lanceur comportant un corps central formé d'un premier étage appelé étage principal cryotechnique (EPC) et d'un deuxième étage, appelé étage propulsif stockable (EPS). Le premier étage transporte de l'oxygène et de l'hydrogène liquides refroidis à de très basses températures, ces fluides alimentant un moteur cryotechnique. Le dernier étage supporte la charge utile à lancer, par exemple un satellite. La fusée comporte également de part et d'autre du corps central, deux étages accélérateurs à poudre (EAP) utilisés pour le décollage. Le moteur cryotechnique est mis en route avant le décollage et fonctionne jusqu'à la séparation du premier et du deuxième étage.

Il existe également des lanceurs utilisant une propulsion au méthane ou une propulsion à poudre.

Ces lanceurs, en particulier les premiers étages de ces lanceurs, sont complètement consommables, i.e. on ne cherche pas à réutiliser celui-ci.

Le développement et la fabrication d'un lanceur représentent un coût très important. Par ailleurs un tel développement est très long.

Il a alors été envisagé de concevoir un lanceur dont le premier étage est réutilisable, i.e. qu'il peut retourner sur le sol sans dommage après sa séparation d'avec le deuxième étage. Un tel lanceur est décrit dans le document US 6 454 216 qui est considéré comme l'état de la technique le plus proche. La partie du corps du lanceur formant le premier étage est composée d'une partie inférieure de propulsion, d'une partie intermédiaire formée par des réservoirs de carburant et de comburant et d'une partie supérieure destinée au retour de l'ensemble de premier étage au sol. Pour cela, le premier étage est muni d'un ensemble de moyens adaptés pour permettre le retour sur Terre et son atterrissage. Le premier étage comporte des surfaces portantes repliées le long du premier étage lors du lancement du lanceur et destinée à se déplier pour le retour du premier étage sur le sol, un train d'atterrissage, un système de commande, et des moteurs aérobies pour assurer le vol retour et pour l'exécution des manoeuvres d'atterrissage.

Ce lanceur présente l'avantage de permettre de récupérer complètement tout le premier étage.

Cependant une telle construction a plusieurs inconvénients. D'une part, lors de la séparation d'avec le deuxième étage, les réservoirs de la partie intermédiaire sont vides, ils représentent donc un très grand volume de masse très faible. Par conséquent, la densité moyenne du premier étage est faible, ce qui rend le premier étage très difficilement récupérable. Par ailleurs, il nécessite la mise en oeuvre d'une grande voilure rapportée sur l'enveloppe du lanceur, notamment au niveau des réservoirs qui est généralement peu rigide. Il faut donc prévoir de rigidifier la zone d'accrochage. L'ajout de cette voilure et des renforts représente une masse supplémentaire qu'il faut propulser, impliquant donc une augmentation de la taille des réservoirs et donc une augmentation sensible du coût du lanceur. Par conséquent, le gain obtenu en récupérant entièrement le premier étage est partiellement perdu dans les modifications impliquées pour permettre cette récupération. Par ailleurs, ce type de lanceur est très éloigné des lanceurs connus.

La demande de brevet internationale WO 2010/072 681 A1 décrit un module récupérable utilisant l'empennage du lanceur comme surface portante, cet empennage comportant trois ailettes dont deux forment des ailes de forme modifiable et une forme une dérive. En outre, il utilise un parachute pour réduire sa vitesse lors dé son entrée dans l'atmosphère. Ce module donne entière satisfaction, on cherche cependant à augmenter davantage sa robustesse et sa fiabilité.

Le but de la présente invention est donc d'offrir un lanceur dont les coûts d'exploitation sont réduits par rapport aux coûts des lanceurs actuels.

### EXPOSÉ DE L'INVENTION

Le but précédemment énoncé est atteint par un lanceur comportant au moins un étage, ledit étage étant divisé en deux parties, une première partie contenant les moteurs fusées, l'avionique, la baie de propulsion, et le système de pressurisation des réservoirs et les moyens de vol aérobies autonomes (surface portante, moteur aérobie et son carburant), et une deuxième partie formée par les réservoirs, les deux parties étant séparables après le lancement, la première partie comportant des moyens pour permettre son retour sur la Terre sans dommage afin d'être réutilisée dans un nouveau lanceur. La première partie forme la partie inférieure dudit étage.

En d'autres termes, on prévoit de réutiliser les éléments ayant un coût élevé, pour cela on réalise un module détachable équipé d'une surface portante et d'un moteur d'avion permettant son atterrissage sur une piste conventionnelle. La non-récupération des réservoirs permet de rendre la partie récupérée beaucoup plus facilement récupérable, du fait de sa densité augmentée. La surface portante comportant des ailes fixes et des stabilisateurs, ce qui rend très simple sa réalisation et sa commande.

La position inférieure de la partie récupérée associée à la présence d'empennages offre par ailleurs une grande stabilité au lanceur lui-même lors de la phase ascendante.

Plus particulièrement, le module comporte une surface portante formée par deux ailes planes munies chacune à son extrémité aval d'un stabilisateur articulé en rotation. On sépare alors la fonction de stabilisation et de portance, ce qui simplifie l'optimisation de chacune de ces fonctions.

De manière avantageuse, on prévoit d'utiliser l'empennage du lanceur comme voilure pour le retour sur Terre.

La présente invention a alors principalement pour objet un module récupérable pour module de propulsion destiné à lancer un engin dans l'espace comportant au moins un étage, ledit module récupérable d'axe longitudinal étant solidaire d'une partie non récupérée lors du lancement, ledit module récupérable comportant un corps central, un système propulsif destiné au lancement de l'engin, des systèmes de commande et de contrôle du système propulsif, des moyens de propulsion en vol subsonique, des surfaces portantes pour le vol subsonique et un train d'atterrissage, la surface portante comportant deux ailes sensiblement planes fixes par rapport au corps central, disposées de part et d'autre du corps central du module et un stabilisateur monté articulé en rotation sur une extrémité aval de chaque aile, chaque stabilisateur comportant au moins une paire de volets d'intrados et d'extrados montés articulés sur ledit stabilisateur de sorte à pouvoir s'écarter l'un de l'autre pour se placer de part et d'autre d'un plan moyen du stabilisateur ou venir en appui l'un contre l'autre de sorte à ne former qu'un seul volet, et des moyens de stabilisation longitudinale, ledit module récupérable étant destiné à être disposé en position inférieure dudit étage, la partie non récupérée comportant au moins un réservoir pour alimenter le système propulsif, ledit module récupérable et ladite partie non récupérée étant destinés à être séparés lorsque le module de propulsion atteint une altitude donnée, le module récupérable étant apte à atterrir de manière maîtrisée après un vol de croisière, par exemple pour un retour vers le site de lancement.

De manière particulièrement avantageuse, les volets d'intrados et d'extrados forment les moyens de stabilisation longitudinale lorsqu'il ne forme qu'un volet.

De manière avantageuse, les surfaces portantes sont formées par l'empennage dudit engin.

De manière préférée, les stabilisateurs sont articulés en rotation autour d'un axe sensiblement parallèle à l'axe longitudinal du module. Par exemple, l'articulation en rotation est réalisée par un raccord cylindrique ou d'une liaison rotule.

Les moyens de propulsion subsonique du module peuvent être de tout type, par exemple il peut s'agir d'une propulsion aérobie ou électrique, d'un turbopropulseur, pulsoréacteur, une hélice avec un moteur thermique ou un moteur électrique. L'hélice peut être dans le corps central ou en bout d'aile.

Dans un exemple particulier, le module récupérable selon la présente invention peut comporter deux moteurs de propulsion de type turbomoteur, chaque moteur étant monté dans le pied d'une aile.

Dans le cas d'un module récupérable selon la présente invention équipé d'au moins un turboréacteur, le module comporte avantageusement une pile thermique d'alimentation du démarreur du ou des moteurs de propulsion subsonique, permettant un démarrage rapide des moteurs.

Le module récupérable selon l'invention présente de préférence un nez émoussé.

La présente invention a également pour objet un module de propulsion destiné à lancer un engin dans l'espace comportant au moins un étage comprenant un module récupérable selon la présente invention et une partie destinée à ne pas être récupérée comportant au moins un réservoir pour alimenter le système propulsif.

Le module de propulsion peut comporter des étages d'accélération latéraux, au moins l'un comportant un module récupérable selon la présente invention.

La présente invention a également pour objet un engin de type lanceur équipé d'un module de propulsion selon la présente invention, comportant au moins deux étages, un étage formé par le module de propulsion et un étage supportant une charge utile, lesdits deux étages étant séparables.

Le lanceur selon l'invention pouvant être du type nanolanceur jusqu'au lanceur superlourd. L'invention peut s'appliquer au corps central ou aux étages d'accélération latéraux ajouter au corps central, appelés également boosters, comme dans la fusée de type Ariane V.

Le module de propulsion forme de préférence l'étage inférieur du lanceur ou un des étages supérieurs.

La présente invention a également pour objet une méthode de récupération du module récupérable selon la présente invention comportant les étapes :
a) de séparation du module récupérable et de la partie non récupérée,
b) de chute libre du module récupérable,
c) lors de l'entrée atmosphérique, d'ouverture des paires de volets d'intrados et d'extrados jusqu'à atteindre une vitesse donnée,
d) de fermeture des paires de volets d'intrados et d'extrados, chaque paire formant alors un volet unique,
e) d'amorçage de la ressource par mise en position des volets d'intrados et d'extrados de sorte qu'ils créent un moment de braquage,
f) de mise en route du au moins un moteur de propulsion en vol subsonique à la fin de la ressource,
g) de vol de croisière de retour, et
h) d'atterrissage.

Avantageusement, l'atterrissage est automatique, suivi de préférence d'un roulage automatique pour dégager la piste d'atterrissage et d'un retour vers une zone sécurisée, ce qui est particulièrement intéressant dans le cas où la piste d'atterrissage est celle d'un aéroport.

Par exemple, la fin de la ressource a lieu vers 2500 m d'altitude.

La méthode de récupération selon l'invention peut comporter préalablement à la phase d'entrée atmosphérique, une étape de modification de l'orientation des stabilisateurs.

Lors de l'étape a), la séparation du module récupérable et de la partie non récupérée a lieu avantageusement dans une direction sensiblement orthogonale au plan de la trajectoire, ce qui permet de discriminer les objets à la rentrée atmosphérique.

### BRÈVE DESCRIPTION DES DESSINS

La présente invention sera mieux comprise à l'aide de la description qui va suivre et des dessins en annexes sur lesquels :
- la figure 1 représente une vue écorchée d'un exemple de lanceur selon la présente invention,
- la figure 2 est une vue de côté du lanceur de la figure 1 en position de lancement,
- la figure 3 est une vue en perspective avant du module récupérable selon la présente invention,
- la figure 4 est une vue en perspective arrière du module de la figure 3,
- la figure 5 est une vue écorchée du module récupérable de la figure 3,
- les figures 6A à 6F sont des vues du module de la figure 3 dans les différentes configurations prises lors de son retour sur le sol,
- la figure 7 est une représentation schématique de la trajectoire du module des figures 3, 4 et 5, représenté par la variation de hauteur Z du module en mètre en fonction de la distance D mesurée au sol en mètre parcouru par rapport au point de séparation du premier et du deuxième étage.

### EXPOSÉ DÉTAILLÉ DE MODES DE RÉALISATION PARTICULIERS

Dans la description qui va suivre, nous décrirons en détail un lanceur du type à deux étages pour expliquer l'invention, mais il est bien entendu que l'invention ne se limite pas à ce type de lanceurs, comme nous le verrons par la suite.

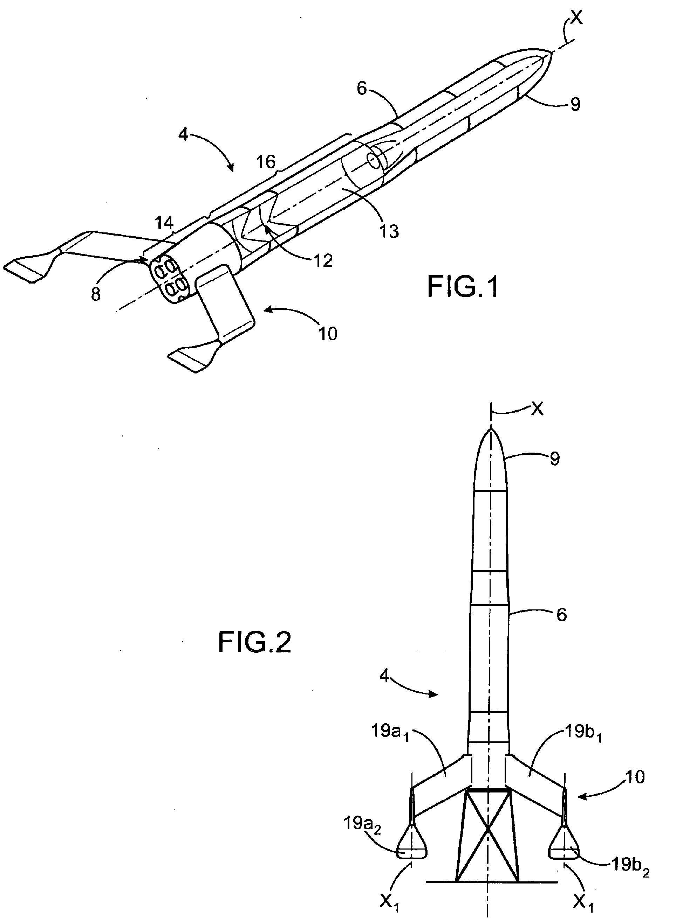

Sur les figures 1 et 2, on peut voir un lanceur selon la présente invention destiné, par exemple à placer des satellites de télécommunication en orbite.

Le lanceur 2 comporte un premier étage 4, un deuxième étage 6 et une coiffe 9. Le lanceur présente un axe longitudinal X le long duquel sont disposés les étages. L'axe longitudinal X est orienté verticalement en position de décollage du lanceur.

Le premier étage 4 comporte les éléments destinés à la propulsion du lanceur, qui seront décrits par la suite.

Le deuxième étage 6 supporte notamment la charge, par exemple le satellite à mettre en orbite.

Le premier étage comporte, à son extrémité inférieure, un ensemble propulsif 8 assurant le décollage du lanceur. Dans l'exemple représenté, cet ensemble propulsif est composé de quatre moteurs cryotechniques et de l'ensemble des moyens de commande des moteurs.

Le lanceur comporte également un empennage 10 au niveau de la périphérie extérieure du premier étage dans sa partie inférieure. L'empennage 10 participe, lors de la phase de décollage, à la stabilisation aérodynamique du lanceur. L'empennage est composé de deux ailettes fixées de manière diamétralement opposées sur la surface extérieure du premier étage. Ces ailettes seront décrites en détail dans la suite de la description.

Le premier étage 4 comporte également les réservoirs 12, 13 de substances nécessaires à l'alimentation du système propulsif 8 lors du décollage. Il s'agit, dans le cas de moteurs cryotechniques, d'un réservoir d'oxygène liquide 12, et d'un réservoir d'hydrogène liquide 13.

Selon la présente invention, le premier étage 4 est divisé en une première partie 14 destinée à être réutilisée dans un lanceur et en une deuxième partie 16 destiné à être perdue, appelée partie non récupérée. La première partie 14 est également appelée module.

Le module 14 comporte les éléments ayant un coût élevé et dont la réutilisation est très avantageuse. Il s'agit notamment de l'ensemble propulsif 8 du lanceur, de la baie de propulsion, du système de pressurisation, de l'avionique et des moyens de génération de puissance électrique.

La partie non récupérée 16 contenant le ou les réservoirs est réalisée de telle sorte qu'elle ne comporte pas ou peu de pièces complexes dont le coût soit élevé, de sorte à réduire le coût des pièces à fournir pour un nouveau vol. Celle-ci étant consommable, sa structure est réduite aux éléments strictement nécessaires à l'alimentation du système propulsif de manière efficace et sûre.

Le module 14 présente une grande densité, puisqu'il ne comporte pas les volumes vides formés par les réservoirs après le lancement.

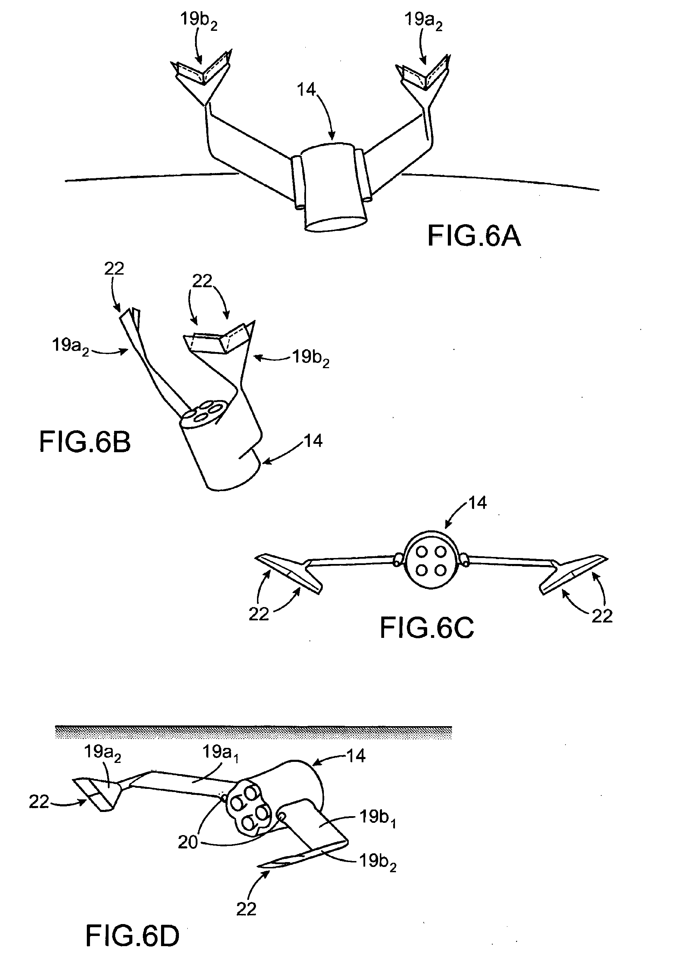

Selon la présente invention, le module 14 est tel qu'il assure son retour sur Terre. Sur les figures 6A à 6F, on peut voir le module lors de différentes phases de retour sur Terre,

Dans l'exemple représenté, le module 14 est prévu au niveau de l'extrémité inférieure du premier étage 4. En effet, le module 14 présentant une surface empennée importante et étant en position basse, a pour effet de reculer le foyer aérodynamique et donc d'augmenter la marge statique en phase ascendante atmosphérique du lanceur.

Il est alors possible d'abaisser le réservoir rempli d'oxygène, qui est le plus lourd au décollage. Ce qui a pour effet de rapprocher le réservoir d'oxygène des moteurs cryotechniques, la marge statique restant suffisante pour assurer la grande stabilité du lanceur. Le rapprochement du réservoir 12 d'oxygène et des moteurs cryotechniques permet de réduire la longueur des lignes d'alimentation du premier étage, conduisant à une réduction de la masse, de la capacité et donc du coût du premier étage.

On prévoit de réutiliser l'empennage comme surface stabilisatrice lors de la rentrée dans l'atmosphère, puis portante pour la phase de retour sur Terre. Ceci est notamment rendu possible par la position basse du module 14, i.e. au niveau de l'empennage du lanceur. En effet, le centre de gravité du module récupérable se situe au niveau de l'empennage du lanceur, par conséquent l'empennage, est utilisable pour assurer la fonction aérodynamique portante du module pendant la phase de vol subsonique.

Nous allons maintenant décrire en détail le module 14, plus particulièrement les moyens mis en oeuvre pour assurer son retour sur Terre.

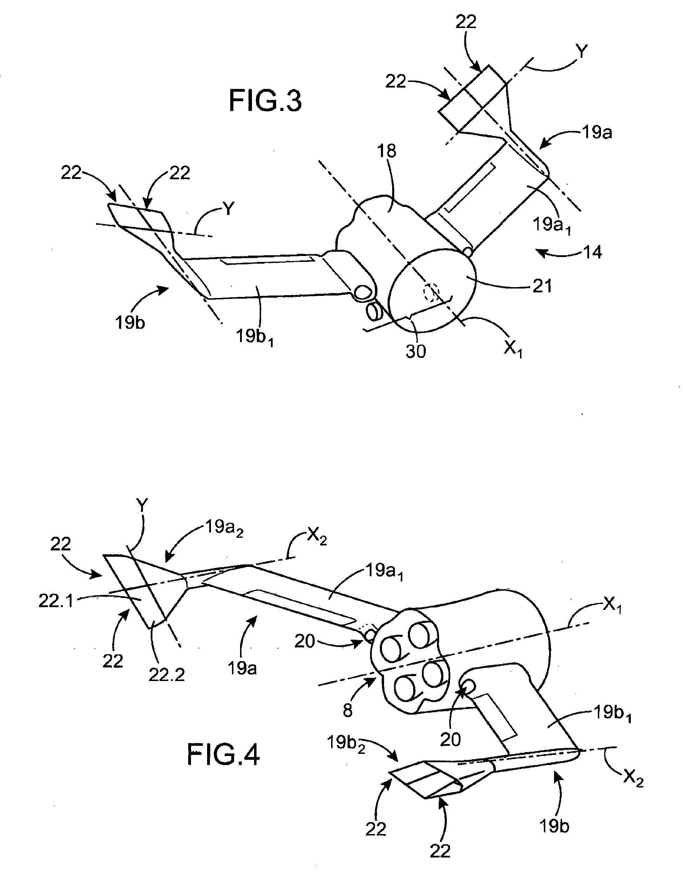

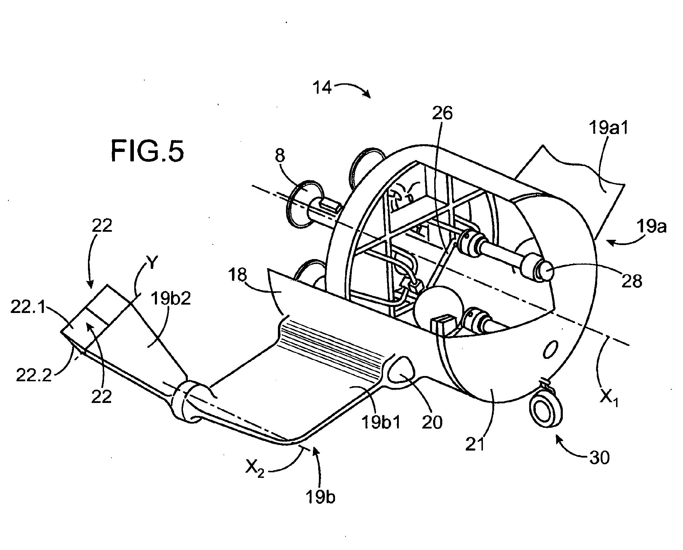

Sur les figures 3 à 5, on peut voir le module récupérable 14 représenté seul.

Le module 14 présente un axe longitudinal X1, coaxial à l'axe X du lanceur en phase de décollage. Il comporte un corps central formé d'une enveloppe 18 qui forme une partie de l'enveloppe du premier étage 4, et les deux ailettes 19a, 19b de l'empennage 10 fixées sur l'enveloppe 18 de manière diamétralement opposée.

Le module 14 comporte un nez 21 de forme émoussée favorisant le freinage du fait de l'augmentation de la trainée d'onde supersonique lors de la phase initiale de la rentrée atmosphérique, cette forme réduit le facteur de charge longitudinal maximal (décélération) et la pression dynamique maximale à la rentrée dans l'atmosphère.

Le module 14 comporte également des moyens de propulsion destiné à propulser le module lors de la croisière de retour.

Les moyens de propulsion subsonique du module peuvent être de tout type, par exemple il peut s'agir d'une propulsion aérobie ou électrique, d'un turbopropulseur, pulsoréacteur, une hélice avec un moteur thermique ou un moteur électrique. L'hélice peut être dans le corps central ou en bout d'aile.

Dans l'exemple représenté, le module 14 comporte deux turboréacteurs 20 intégrés dans le pied des ailettes de part et d'autre de l'enveloppe 18.

En variante, on peut prévoir que le module ne comporte qu'un seul moyen de propulsion disposé dans un moteur dans un conduit confondu avec l'axe longitudinal du module.

Lorsque le module 14 forme la partie basse du premier étage du lanceur, des canalisations 26 du module sont connectées à des canalisations (non représentées) dans la partie non récupérée pour relier les réservoirs de la partie non récupérée 16 aux moteurs cryotechniques 8 du module 14. Lors de la séparation du module 14 d'avec la partie non récupérée, ces canalisations 26 sont obturées par des clapets 28 au niveau de leur raccord avec les canalisations de la partie non récupérée.

Le module 14 comporte également un train d'atterrissage 30. Le module étant très court, il n'est pas nécessaire d'avoir un train d'atterrissage présentant une grande hauteur. On peut donc avantageusement prévoir un train d'atterrissage fixe ou semi-fixe, en saillie de la surface du lanceur en permanence. Celui-ci peut donc être de réalisation très simple et très robuste. Il est bien entendu qu'un module muni d'un train d'atterrissage rétractable ne sort pas du cadre de la présente invention.

Le train d'atterrissage 30 est composé de trois roues, par exemple une roue est fixée sur l'enveloppe du module et les deux autres roues sont fixées sur les ailettes 19b et 19c ou sur le corps central.

Le module 14 comporte des systèmes de contrôle d'attitude (non représentés) destinés à modifier l'attitude du module lors de la phase exoatmosphérique. Ces systèmes sont, de manière non limitative, en bout des ailettes 19a et 19b près du raccord avec les stabilisateurs. Ils peuvent en variante être situés sur le corps.

Nous allons maintenant décrire les ailettes 19a et 19b. Celles-ci forment la surface portante du module 14 pour assurer sa portance aérodynamique et permettre son retour sur le sol.

Selon la présente invention, chaque ailette 19a et 19b comporte une aile 19a1, 19b1 respectivement et un stabilisateur 19a2, 19b2 respectivement.

Les deux ailettes étant identiques, nous ne décrirons en détail que l'ailette 19a.

L'aile 19a1 présente de manière particulièrement avantageuse une forme classique d'aile d'avion. L'aile présente donc une forme fixe. En outre, elle peut être avantageusement d'épaisseur sensiblement constante, ce qui simplifie sa réalisation.

Le stabilisateur 19a2 est monté articulé en rotation sur une extrémité aval de l'aile 19a1. Dans l'exemple représenté, l'axe de rotation X2 du stabilisateur 19a2 est sensiblement parallèle à l'axe X1 du module. L'angle de rotation du stabilisateur est par exemple au plus de 30°, voire 40°. On peut prévoir, en variante, que l'axe de rotation X2 peut être incliné par rapport à l'axe X1, par exemple d'un angle divergent ou convergent de 5° à 10°.

Les stabilisateurs peuvent être fixes pendant tout le vol de retour.

Par exemple, l'articulation entre le stabilisateur 19a2 et l'aile 19a1 est formée par un raccord cylindrique d'axe X2, la stabilisateur pivote donc autour de l'axe X2 par rapport à l'aile 19a1. De manière alternative, l'articulation pourrait être de type rotule.

Dans l'exemple représenté, le stabilisateur a la forme d'un triangle articulé sur l'aile au niveau d'un sommet du triangle. Il est bien entendu que les stabilisateurs peuvent avoir une autre forme, par exemple carrée, delta gothique...

En outre selon l'invention, le stabilisateur 19a2 est équipé d'au moins une paire 22 de volets d'intrados et d'extrados 22.1, 22.2 montés articulés sur le stabilisateur autour d'un axe Y, sensiblement orthogonal à l'axe X2. La paire de volets d'intrados et d'extrados est également appelée "volets crocodiles". Les deux volets d'intrados et d'extrados 22.1, 22.2 sont aptes à passer d'une position fermée, dans laquelle les deux volets sont sensiblement l'un sur l'autre de sorte à former un seul volet, à une position ouverte dans laquelle les deux volets d'intrados et d'extrados sont écartés l'un de l'autre de part et d'autre du plan du stabilisateur.

Lorsque les volets d'intrados et d'extrados ne forment qu'un volet, ils remplissent la fonction de calage de profondeur assurant la stabilité longitudinale, et lorsqu'ils sont écartés, ils remplissent une fonction de freinage.

En variante, on peut prévoir de séparer les fonctions freinage et de calage de profondeur. Par exemple, des volets d'intrados et d'extrados de taille réduite sont disposés au centre du stabilisateur et deux volets de calage de profondeur sont disposés de part et d'autre des volets d'intrados et d'extrados, participant à la stabilisation longitudinale.

Dans l'exemple représenté, les stabilisateurs 19a2, 19b2 sont équipés chacun de deux paires de volets d'intrados et d'extrados 22.

Les déplacements des stabilisateurs et des volets d'intrados et d'extrados peuvent être obtenus par tout type de moyen connu, par exemple on peut utiliser une commande pneumatique, hydraulique ou électrique.

Lors du décollage, les stabilisateurs peuvent soit être alignés avec les ailes, soit être pivotés d'un angle par rapport aux volets, par exemple de 90°.

Comme nous l'expliquerons lors de la description du fonctionnement du module selon la présente invention, il est préférable d'avoir une mise en route rapide du ou des moteurs 20, par exemple des turboréacteurs. On utilise alors avantageusement une source d'énergie supplémentaire sur l'arbre de puissance du ou des turboréacteurs, par exemple une pile thermique pour alimenter un démarreur électrique de forte puissance, susceptible d'assurer la mise en rotation des turboréacteurs de façon accélérée. La puissance du démarreur est transmise sur l'arbre de servitude des turboréacteurs. On prévoit de préférence de changer la pile thermique après chaque vol.

Le module 14 est solidarisé à la partie non récupérée 16 par des moyens de type connu, comme des brides.

Le module 14 présente une grande stabilité passive intrinsèque, i.e. entre le vol hypersonique et Mach 0,8, le module 14 se positionne automatiquement le nez vers l'avant dans le sens de la chute. Ainsi, dans les cas où le module et la partie non récupérée se sépareraient de manière non classique, le module reprendrait automatiquement et naturellement sa position stable, sans qu'il soit nécessaire de prévoir des moyens spécifiques pour assurer ce repositionnement.

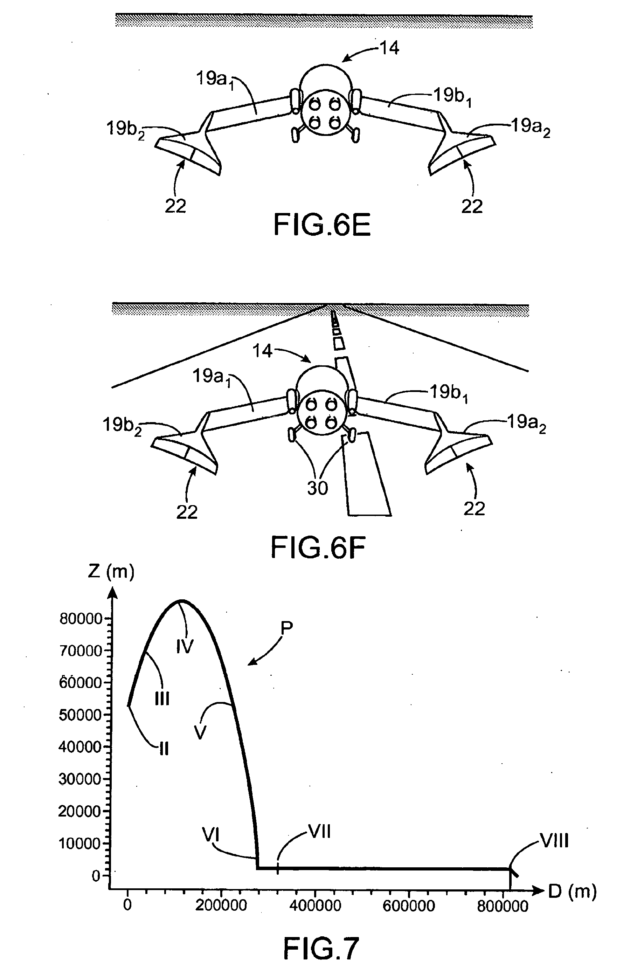

Nous allons maintenant décrire les différentes phases du vol du module selon l'invention au moyen des figures 6A à 6F et 7.

Dans sa configuration initiale représentée sur la figure 2, le lanceur est composé du premier étage 4, du deuxième étage 6 contenant la charge utile et de la coiffe. Le premier étage 4 est composé du module 14 et des réservoirs remplis. Dans la configuration représentée, chaque stabilisateur 19a2 et 19b2 peut être sensiblement dans le plan de l'aile 19a1, 19b1 respectivement.

Le lanceur équipé du module 14 décolle à la verticale, propulsé par les moteurs cryotechniques, ceux-ci étant alimentés par les réservoirs disposés dans la partie non récupérée, ce qui correspond à la phase I. A une altitude voisine de plus ou moins 50 km, le premier étage 4 se désolidarise du deuxième étage 6, la vitesse est environ à Mach 5. Désormais le module 14 n'est rattaché qu'aux réservoirs, ce qui correspond à l'étape II de la trajectoire schématisée sur la figure 7.

Après la séparation d'avec le deuxième étage, le premier étage 4 poursuit une trajectoire balistique suborbitale (phase III) jusqu'à sortir de l'atmosphère terrestre.

C'est alors que le module 14 est séparé de la partie non récupérée 16, la pression dynamique est alors très faible, de l'ordre de 20 Pa (phase IV).

Il est avantageusement prévu d'effectuer la séparation du module 14 et de la partie non récupérée 16 dans une direction perpendiculaire au plan de trajectoire P, qui est formé par le plan de la feuille de la figure 7, de sorte à assurer une discrimination suffisante entre le module 14 et la partie non récupérée 16. Pour cela, avant la séparation, on oriente le premier étage de sorte à ce que son axe longitudinal soit sensiblement orthogonal au plan de la trajectoire P à l'aide des systèmes de contrôle d'attitude. Lorsque le premier étage 6 est correctement orienté, on provoque la séparation du module 14 et de la partie non récupérée 16, par des moyens connus, par exemple similaires à ceux employés pour la séparation du premier et du deuxième étage. Le module 14 présentant une densité très supérieure à celle de la partie non récupérée 16, celui-ci va tomber plus vite et plus loin. En outre, comme indiqué précédemment, le module, du fait de sa stabilité intrinsèque, va s'orienter automatiquement de sorte à avoir le nez vers le bas comme on peut le voir sur la figure 6A.

Le module 14 chute ensuite suivant une trajectoire balistique représenté sur la figure 6A. Lors de cette phase de chute, les stabilisateurs 19a2, 19b2 pivotent éventuellement autour de l'axe X2 afin de prendre la position de stabilisation requise lors de la phase de vol atmosphérique.

Au point V, Le module 14, représenté sur la figure 6B, effectue une rentrée atmosphérique balistique à incidence et dérapage nuls, les volets d'intrados et d'extrados 22 de chaque paire sont écartés l'un de l'autre, de sorte à être disposés en biais par rapport au plan du stabilisateur et de l'aile et ainsi former une surface de freinage et de stabilisation significative.

Les volets d'intrados et d'extrados 22 sont maintenus ouverts jusqu'à ce que le module 14 atteigne une vitesse subsonique, proche de Mach 0,85, l'altitude correspondant à cette vitesse étant environ 10 km (point VI de la trajectoire). Il peut être montré que cette vitesse correspond toujours sensiblement à une altitude de 10 km pour différentes conditions de culmination du premier étage et différentes valeurs du coefficient balistique du module 14.

Au point VI (figure 6C), donc à environ 10 km d'altitude, les volets d'intrados et d'extrados sont refermés et le volet unique qu'ils forment est alors mis dans une position de sorte qu'il crée un moment cabreur amorçant ainsi la ressource. La ressource ainsi amorcée s'effectue sous un facteur de charge de l'ordre de 2,5 g transverses. La fin de la ressource a lieu vers une altitude de 2500 m environ.

La propulsion atmosphérique, par exemple les turboréacteurs, est alors mise en route de manière rapide au moyen de la pile thermique pour les turboréacteurs, (de la figure 6C à la figure 6D), peu avant la mise en palier du module (figure 6D). A partir du point VII, il s'agit de la phase de croisière de retour, celle-ci a lieu à vitesse subsonique de l'ordre de Mach 0,3 et à une altitude de l'ordre de 3500 m. Un ajustement progressif vers une altitude croisière optimale peut être prévu.

Cette phase de croisière se termine à partir du point VIII par un atterrissage sur une piste d'atterrissage conventionnelle, avantageusement non loin du pas de tir du lanceur ; les figures 6E et 6F représentant les phases d'approche et d'atterrissage respectivement.

Cet atterrissage est généralement suivi d'un roulage vers une zone sécurisée pour la remise en condition de vol de l'engin.

Avantageusement l'atterrissage a lieu de manière automatique et le roulage a lieu de manière autonome, évitant ainsi de bloquer la piste et autorisant plusieurs atterrissages successifs de modules, par exemple dans le cas où les modules sont des boosters.

Il est bien entendu que le véhicule peut revenir ailleurs que sur le pas de tir du lanceur qu'il équipait.

Le module selon la présente invention est de réalisation relativement simple et également de fonctionnement relativement simple et robuste.

L'orientation des stabilisateurs n'est pas nécessairement modifiée pendant la phase de croisière et seuls les volets intrados et d'extrados sont déplacés.

Le vol du module peut être complètement autonome ou commandé à distance.

En séparant les fonctions de portance et de stabilisation, le module s'affranchit des inconvénients relatifs aux ailes volantes.

Les ailettes du lanceur selon l'invention et formant la surface portante du module selon l'invention ne présentent pas de vrillage, qui est généralement gênant lors du lancement du lanceur et de la rentrée atmosphérique du module.

Par ailleurs, celles-ci sont de réalisations plus simples et moins coûteuses.

Par ailleurs, dans le cas d'une aile volante, l'équilibrage et la stabilité longitudinale et latérale est obtenue par un ensemble de surfaces mobiles réparties sur le bord de fuite de la voilure, ce qui implique un contrôle complexe de l'orientation de ces surfaces. Dans le cas de la présente invention, la stabilité est obtenue grâce aux stabilisateurs 19a2, 19b2, dont le contrôle est simplifié.

En outre, la disposition reculée des stabilisateurs en bout d'aile, permet d'une part d'y monter les volets d'intrados et d'extrados, d'autre part d'accroître la traînée d'onde significativement, et enfin d'assurer le recul du foyer aérodynamique au voisinage de l'incidence et du dérapage nuls.

De plus, la combinaison ailes et stabilisateurs (configuration dite conventionnelle sur un avion), permet d'accroître la robustesse aux variations de centrage, la position du centre de gravité pouvant varier dans une plus grande marge, ce qui facilite l'équilibrage du module, qui est alors similaire à celui d'un avion conventionnel.

En outre, le module selon la présente invention offre l'avantage de ne présenter qu'un changement de forme réduit au braquage des stabilisateurs, qui est potentiellement de l'ordre de quelques dizaines de degrés, voire nul. En d'autres termes, les surfaces déplacées sont réduites. En effet, le changement d'orientation des stabilisateurs est effectué en phase exoatmosphérique, ce qui ne perturbe pas le vol du module. Ensuite, lors de l'entrée dans l'atmosphère, de préférence seuls les volets d'intrados et d'extrados sur les stabilisateurs sont déplacés, dans une première phase pour ralentir le module et d'une deuxième phase pour contrôler le module en vol de croisière.

Ce changement de forme limité présente l'avantage de pouvoir réaliser une manoeuvre de ressource à une pression dynamique et Mach plus élevés, puisque les surfaces déplacées sont réduites, et de fait l'effort pour les déplacer. Ceci permet alors de ne pas devoir recourir à un parachute qui est un élément consommable. Le coût général est encore réduit.

Par ailleurs, on dispose d'un degré de liberté sur l'angle de dièdre des stabilisateurs articulés en bout d'aile. La modification de leur orientation permet d'adapter les caractéristiques du module. En effet, en modifiant leur orientation, il est possible d'ajuster la position longitudinale des foyers pour l'incidence et de lacet ainsi que de moduler la position verticale du foyer en roulis induit par le dérapage.

Grâce à la présente invention, l'atterrissage et, si besoin lors des phases de développement, le décollage, du module selon la présente invention peuvent s'effectuer de manière conventionnelle, avec une maîtrise facilitée pour un pilote humain, et ceci même par vent de travers.

Le module 14 selon la présente invention représente plus de 80 % de la valeur du lanceur et environ 60 % de la masse inerte du premier étage. Il est bien entendu que le pourcentage représenté par le module par rapport au coût total du lanceur dépend du nombre de moteurs 20 du système propulsif. Par conséquent, la réutilisation du module 14 permet de réduire sensiblement les coûts d'exploitation d'un nouveau lanceur.

En outre, le coût de développement du module 14 est réduit significativement par rapport au coût de développement d'un premier étage complètement réutilisable, d'environ 35 %.

En supposant 10 réutilisations des moteurs du lanceur grâce au retour du module 14, ce qui correspond environ à une durée de vie cumulée de 2000 s, le coût récurrent moyen, en considérant un cycle total de vie du module de 100 vols, d'un premier étage selon la présente invention, est estimé à 25 % du coût de l'étage consommable correspondant sur les mêmes 100 vols.

On cherche avantageusement à réaliser des moteurs de propulsion très robustes afin de maximiser leur nombre de réutilisations.

Il apparaît donc que la présente invention permet une réduction importante des coûts de production et d'exploitation.

Selon l'invention, le module utilise des technologies connues et éprouvées dans le domaine de l'aérodynamique, les coûts et le temps de développement sont donc réduits.

Grâce à l'invention, le module 14 présente une densité volumique importante puisqu'il ne comporte pas les réservoirs vides, ce qui facilite sa manipulation lors de son retour sur Terre et son scénario de récupération.

La forme émoussée du nez permet de maximiser la traînée d'onde supersonique.

On peut prévoir d'optimiser encore la traînée globale du module au cours du vol de retour en croisière subsonique en optimisant la traînée de culot du module, sachant que cette traînée représente la contribution principale à la traînée globale subsonique. Pour cela, on peut prévoir d'ajouter un cône arrière de forme modifiable, par exemple gonflable lors de la phase de freinage.

Les phases d'entrée atmosphérique et portante subsonique offrent de nombreux degrés de liberté pour ajuster les performances du module. On peut modifier la vitesse de début de la ressource, on peut agir sur le facteur de charge transverse durant la ressource, on peut également modifier l'altitude de croisière retour du module jusqu'à la piste d'atterrissage.

Le module récupérable 14 selon la présente invention peut être utilisé pour toute taille de lanceurs, des nanolanceurs jusqu'aux lanceurs superlourds. Ce module est facilement adaptable à différents modules de propulsion, différentes tailles de véhicule et différents types de mission.

Le module selon la présente invention a été décrit dans le cas d'un lanceur à deux étages, mais il peut également s'appliquer à un véhicule à un seul étage pour former un démonstrateur ou comme banc d'essais volant pour des expérimentations en vol, ou à un lanceur comportant au moins deux étages, le module étant situé dans l'étage inférieur ou dans l'un des étages supérieurs.

Il est bien entendu que l'on pourrait combiner aux volets d'intrados et d'extrados un ou des parachute(s) dans le cas où le freinage fourni par les volets était insuffisant.

En variante, on peut envisager un module comportant des ailes fixes munies des stabilisateurs tels que décrits et d'obtenir le freinage au moyen d'un parachute au lieu des volets crocodiles.

## Revendications

1. Module récupérable pour module de propulsion destiné à lancer un engin dans l'espace comportant au moins un étage, ledit module récupérable d'axe longitudinal (X1) étant solidaire d'une partie non récupérée (16) lors du lancement, ledit module récupérable (14) comportant un corps central, un système propulsif (8) destiné au lancement de l'engin, des systèmes de commande et de contrôle du système propulsif, des moyens de moteur de propulsion (20) en vol subsonique, des surfaces portantes pour le vol subsonique et un train d'atterrissage (30), la surface portante comportant deux ailes (19a1, 19b1) sensiblement planes fixes par rapport au corps central, disposées de part et d'autre du corps central du module et un stabilisateur (19a2, 19b2) monté articulé en rotation sur une extrémité aval de chaque aile (19a1, 19b1), chaque stabilisateur comportant au moins une paire de volets d'intrados et d'extrados (22) montés articulés sur ledit stabilisateur (19a2, 19b2) de sorte à pouvoir s'écarter l'un de l'autre pour se placer de part et d'autre d'un plan moyen du stabilisateur (19a2, 19b2) et freiner les module, ou venir en appui l'un contre l'autre de sorte à ne former qu'un seul volet et des moyens de stabilisation longitudinale, ledit module récupérable (14) étant destiné à être disposé en position inférieure dudit étage, la partie non récupérée comportant au moins un réservoir pour alimenter le système propulsif, ledit module récupérable (14) et ladite partie non récupérée (16) étant destinés à être séparés lorsque le module de propulsion atteint une altitude donnée, le module récupérable (14) étant apte à atterrir de manière maîtrisée après un vol de croisière, par exemple pour un retour vers le site de lancement.

2. Module récupérable selon la revendication 1, dans lequel les moyens de stabilisation longitudinale sont formés par les volets d'intrados et d'extrados lors qu'ils ne forment qu'un seul volet.

3. Module récupérable selon la revendication 1 ou 2, dans lequel les surfaces portantes sont formées par l'empennage (10) dudit engin.

4. Module récupérable selon la revendication 1, 2 ou 3, dans lequel les stabilisateurs (19a2, 19b2) sont articulés en rotation autour d'un axe sensiblement parallèle à l'axe longitudinal (X1) du module.

5. Module récupérable selon l'une des revendications 1 à 4, dans lequel l'articulation en rotation est réalisée par un raccord cylindrique ou une liaison rotule.

6. Module récupérable selon l'une des revendications 1 à 5, dans lequel les moyens de propulsion comportant des moteurs de propulsion (20) atmosphérique, montés dans les emplantures des ailes (19a1, 19b1).

7. Module récupérable selon l'une des revendications 1 à 6, dans lequel, lorsque les moyens de propulsion sont formées par un ou plusieurs turboréacteurs, le module comporte une source d'énergie supplémentaire pour un allumage rapide du ou des turboréacteurs par exemple formée par une pile thermique d'alimentation du démarreur du ou des turboréacteurs.

8. Module récupérable selon l'une des revendications 1 à 7, dans lequel le module récupérable a un nez émoussé (21).

9. Module de propulsion destiné à lancer un engin dans l'espace comportant au moins un étage (4) comprenant au moins un module récupérable (14) selon l'une des revendications 1 à 8 et une partie destinée à ne pas être récupérée comportant au moins un réservoir (12, 13) pour alimenter le système propulsif (8).

10. Module de propulsion destiné à lancer un engin dans l'espace selon la revendication 9, comportant des étages d'accélération latéraux, au moins l'un comportant un module récupérable selon l'une des revendications 1 à 8.

11. Engin de type lanceur équipé d'un module de propulsion selon la revendication 9 ou 10, comportant au moins deux étages (14, 16), un étage formé par le module de propulsion et un étage supportant une charge utile, lesdits deux étages étant séparables.

12. Lanceur selon la revendication 11, ledit lanceur pouvant être du type nanolanceur jusqu'au lanceur superlourd.

13. Lanceur selon la revendication 12, dans lequel le module de propulsion forme l'étage inférieur du lanceur ou un des étages supérieurs.

14. Méthode de récupération du module récupérable selon l'une des revendications 1 à 8 comportant les étapes :
a) de séparation du module récupérable (14) et de la partie non récupérée,
b) de chute du module récupérable (14),
c) lors de l'entrée atmosphérique d'ouverture des paires de volets d'intrados et d'extrados (22) jusqu'à atteindre une vitesse donnée,
d) de fermeture des paires volets d'intrados et d'extrados (22), chaque paire formant alors un volet unique,
e) d'amorçage de la ressource par mise en position des volets d'intrados et d'extrados (22) de sorte qu'ils créent un moment de braquage,
f) de mise en route des moyens de propulsion atmosphérique (20) en vol subsonique à la fin de la ressource,
g) de vol de croisière de retour, et
h) d'atterrissage.

15. Méthode selon la revendication 14, dans lequel l'atterrissage est automatique, et est suivi d'une phase de roulage et de freinage automatique.

16. Méthode selon la revendication 14 ou 15, comportant préalablement à la phase d'entrée atmosphérique, une étape de modification de l'orientation des stabilisateurs (19a2, 19b2), et éventuellement d'ajustement en phase de vol.

17. Méthode selon la revendication 14, 15 ou 16, dans laquelle lors de l'étape a), la séparation du module récupérable (14) et de la partie non récupérée a lieu dans une direction sensiblement orthogonale au plan de la trajectoire.

## Patentansprüche

1. Wiederverwertbares Modul für ein Antriebsmodul, das dazu bestimmt ist, eine Rakete ins All zu schießen, umfassend mindestens eine Stufe, wobei das wiederverwertbare Modul mit einer Längsachse (X1) mit einem nicht wiederverwerteten Teil (16) beim Abschuss verbunden ist, wobei das wiederverwertbare Modul (14) einen zentralen Körper, ein Antriebssystem (8), das für den Abschuss der Rakete bestimmt ist, Steuer- und Kontrollsysteme für das Antriebssystem, Antriebsmotor Mittel (20) im Unterschallflug, Tragflächen für den Unterschallflug und ein Fahrwerk (30), wobei die Tragfläche zwei Flügel (19a1, 19b1), die im Wesentlichen flach und in Bezug zum zentralen Körper feststehend und beiderseits des zentralen Körpers des Moduls angeordnet sind, und einen Stabilisator (19a2, 19b2) umfasst, der drehgelenkig auf einem stromabwärtigen Ende jedes Flügels (19a1, 19b1) montiert ist, wobei jeder Stabilisator, umfassend mindestens ein Paar Flügelunterseiten- und Flügeloberseitenklappen (22), die gelenkig auf dem Stabilisator (19a2, 19b2) montiert sind, so dass sie sich voneinander entfernern können, um sich beiderseits einer Mittelebene des Stabilisators (19a2, 19b2) anzuordnen und das Modul zu bremsen, oder aneinander zur Anlage zu kommen, um nur eine einzige Klappe zu bilden, und Längsstabilisierungsmittel, wobei das wiederverwertbare Modul (14) dazu bestimmt ist, in unterer Position der Stufe angeordnet zu werden, wobei der nicht wiederverwertete Teil mindestens einen Behälter umfasst, um das Antriebssystem zu speisen, wobei das wiederverwertbare Modul (14) und der nicht wiederverwertete Teil (16) dazu bestimmt sind, getrennt zu werden, wenn das Antriebsmodul eine gegebene Höhe erreicht, wobei das wiederverwertbare Modul (14) geeignet ist, auf gesteuerte Weise nach einem Rundflug zu landen, beispielsweise um zum Abschussstandort zurückzukehren.

2. Wiederverwertbares Modul nach Anspruch 1, bei dem die Längsstabilisierungsmittel von Flügelunterseitenklappen und Flügeloberseitenklappen gebildet sind, wenn sie nur eine einzige Klappe bilden.

3. Wiederverwertbares Modul nach Anspruch 1 oder 2, bei dem die Tragflächen vom Leitwerk (10) der Rakete gebildet sind.

4. Wiederverwertbare Modul nach Anspruch 1, 2 oder 3, bei dem die Stabilisatoren (19a2, 19b2) drehgelenkig um eine Achse im Wesentlichen parallel zur Längsachse (X1) des Moduls montiert sind.

5. Wiederverwertbares Modul nach einem der Ansprüche 1 bis 4, bei dem das Drehgelenk durch einen zylindrischen Anschluss oder eine Kugelgelenkverbindung hergestellt ist.

6. Wiederverwertbares Modul nach einem der Ansprüche 1 bis 5, bei dem die Antriebsmittel atmosphärische Antriebsmotoren (20) umfassen, die in den Flügelwurzeln (19a1, 19b1) montiert sind.

7. Wiederverwertbares Modul nach einem der Ansprüche 1 bis 6, bei dem, wenn die Antriebsmittel von einem oder mehreren Turboreaktoren gebildet sind, das Modul eine zusätzliche Energiequelle für eine rasche Zündung des oder der Turboreaktoren umfasst, die beispielsweise von einer thermischen Batterie zur Speisung des Starters des oder der Turboreaktoren gebildet ist.

8. Wiederverwertbares Modul nach einem der Ansprüche 1 bis 7, bei dem das wiederverwertbare Modul eine stumpfe Spitze (21) hat.

9. Antriebsmodul, das dazu bestimmt ist, eine Rakete ins All zu schießen, umfassend mindestens eine Stufe (4), umfassend mindestens ein wiederverwertbares Modul (14) nach einem der Ansprüche 1 bis 8 und einen Teil, der dazu bestimmt ist, nicht wiederverwertet zu werden, umfassend mindestens einen Behälter (12, 13) zum Speisen der Antriebsvorrichtung (8).

10. Antriebsmodul nach Anspruch 9, das dazu bestimmt ist, eine Rakete ins All zu schießen, umfassend seitliche Beschleunigungsstufen, wobei mindestens eine ein wiederverwertbares Modul nach einem der Ansprüche 1 bis 8 umfasst.

11. Rakete vom Typ Trägerrakete, die mit einem Antriebsmodul nach Anspruch 9 oder 10 ausgestattet ist, umfassend mindestens zwei Stufen (14, 16), eine Stufe, die von dem Antriebsmodul gebildet ist, und eine Stufe, die eine Nutzlast trägt, wobei die beiden Stufen trennbar sind.

12. Trägerrakete nach Anspruch 11, wobei die Trägerrakete vom Typ Nanoträgerrakete bis superschwere Trägerrakete sein kann.

13. Trägerrakete nach Anspruch 12, bei der das Antriebsmodul die untere Stufe der Trägerrakete oder eine der oberen Stufen bildet.

14. Methode zur Wiederverwertung des wiederverwertbaren Moduls nach einem der Ansprüche 1 bis 8, umfassend die folgenden Schritte:
a) Trennen des wiederverwertbaren Moduls (14) und des nicht wiederverwerteten Moduls,
b) Abwerfen des wiederverwertbaren Moduls (14),
c) beim Eintritt in die Atmosphäre Öffnen der Paare von Flügelunterseitenklappen und Flügeloberseitenklappen (22) bis zum Erreichen einer gegebenen Geschwindigkeit,
d) Schließen der Paare von Flügelunterseitenklappen und Flügeloberseitenklappen (22), wobei jedes Paar nun eine einzige Klappe bildet,
e) Zünden der Ressource durch Anordnen der Flügelunterseitenklappen und Flügeloberseitenklappen (22) in Position, so dass sie einen Lenkmoment erzeugen,
f) Ingangsetzen der atmosphärischen Antriebsmittel (20) im Unterschallflug am Ende der Ressource,
g) Rundflug zurück und
h) Landung.

15. Methode nach Anspruch 14, bei der die Landung automatisch ist, gefolgt von einer automatischen Roll- und Bremsphase.

16. Methode nach Anspruch 14 oder 15, umfassend vor der Phase des Eintritts in die Atmosphäre einen Schritt der Änderung der Ausrichtung der Stabilisatoren (19a2, 19b2) und eventuell der Einrichtung in der Flugphase.

17. Methode nach Anspruch 14, 15 oder 16, bei der in Schritt a) die Trennung des wiederverwertbaren Moduls (14) und des nicht wiederverwerteten Teils in eine Richtung im Wesentlichen orthogonal zur Ebene der Flugbahn erfolgt.

## Claims

1. Recoverable module for a propulsion module intended to launch a craft into space, comprising at least one stage, said recoverable module of longitudinal axis (X1) being secured to a non-recovered part (16) during launch, said recoverable module (14) comprising a central body, a propulsion system (8) configured to launch the craft, systems for commanding and controlling the propulsion system, means of propulsion (20) in subsonic flight, lift surfaces for subsonic flight and landing gear (30), the lift surface comprising two substantially flat wings (19a1, 19b1) fixed with respect to the central body, arranged on either side of the central body of the module, and a stabiliser (19a2, 19b2) mounted so as to be articulated for rotation on a downstream end of each wing (19a1, 19b1), each stabiliser comprising at least one pair of lower wing surface and upper wing surface flaps (22) mounted so as to be articulated on said stabiliser (19a2, 19b2) so as to be able to separate from each other in order to be placed on either side of a midplane of the stabiliser (19a2, 19b2) and brake the modules, or to come into abutment against each other so as to form only a single flap, and longitudinal stabilisation means, said recoverable module (14) being intended to be placed in a lower position of said stage, the non-recovered part comprising at least one tank for supplying the propulsion system, said recoverable module (14) and said non-recovered part (16) being configured to be separated when the propulsion module reaches a given altitude, the recoverable module (14) being able to land in a controlled fashion after a cruising flight, for example for a return to the launch site.

2. Recoverable module according to claim 1, in which the longitudinal stabilisation means are formed by lower wing surface and upper wing surface flaps when they form only a single flap.

3. Recoverable module according to claim 1 or 2 in which the lift surfaces are formed by the empennage (10) of said craft.

4. Recoverable module according to claim 1, 2 or 3, in which the stabilisers (19a2, 19b2) are articulated for rotation about an axis substantially parallel to the longitudinal axis (X1) of the module.

5. Recoverable module according to one of claims 1 to 4, in which the rotation articulation is achieved by a cylindrical coupling or a swivel connection.

6. Recoverable module according to one of claims 1 to 5, in which the propulsion means comprise atmospheric propulsion engines (20), mounted in the roots of the wings (19a1, 19b1).

7. Recoverable module according to one of claims 1 to 6, in which, when the propulsion means are formed by one or more turbojet engines, the module comprises a supplementary energy source for rapid ignition of the turbojet engine or engines, for example formed by a thermal battery supplying the starter of the turbojet engines or engines.

8. Recoverable module according to one of claims 1 to 7, in which the recoverable module has a blunt nose (21).

9. Propulsion module intended to launch a craft into space, comprising at least one stage (4) comprising at least one recoverable module (14) according to one of claims 1 to 8 and a part intended not to be recovered comprising at least one tank (12, 13) for supplying the propulsion system (8).

10. Propulsion module intended to launch a craft into space according to claim 9, comprising lateral acceleration stages, at least one comprising a recoverable module according to one of claims 1 to 8.

11. Craft of the launcher type equipped with a propulsion module according to claim 9 or 10, comprising at least two stages (14, 16), a stage formed by the propulsion module and a stage supporting the payload, said two stages being separable.

12. Launcher according to claim 11, said launcher being able to be from the nanolauncher to superheavy launcher type.

13. Launcher according to claim 12, in which the propulsion module forms the bottom stage of the launcher or one of the upper stages.

14. Method of recovering the recoverable module according to one of claims 1 to 8, comprising the steps of:
a) separation of the recoverable module (14) and the non-recovered part,
b) free fall of the recoverable module (14),
c) on atmospheric entry, opening of the pairs of lower wing surface and upper wing surface flaps (22) until a given speed is reached,
d) closure of the pairs of lower wing surface and upper wing surface flaps (22), each pair then forming a single flap,
e) initiation of the resource by putting the lower wing surface and upper wing surface flaps (22) in position so that they create a deflection moment,
f) starting of at least one propulsion engine (20) in subsonic flight at the end of the resource,
g) cruising return flight, and
h) landing.

15. Method according to claim 14, in which the landing is automatic, and is followed by an automatic taxiing and braking phase.

16. Method according to claim 14 or 15, comprising, prior to the phase of entry into the atmosphere, a step of modification of the orientation of the stabilisers (19a2, 19b2), and if necessary of adjustment in the flight phase.

17. Method according to claim 14, 15 or 16 in which, during step a), the separation of the recoverable module (14) and the non-recovered part takes place in a direction substantially orthogonal to the plane of the trajectory.
